# FASCICULE DE BREVET EUROPEEN

(11) **EP 2 401 305 B1**
(45) Date de publication et mention de la délivrance du brevet: **07.08.2024**
(21) Numéro de dépôt: 10703963.8
(22) Date de dépôt: 10.02.2010
(51) Int. Cl.: C08F 8/44, C08F 20/06

(54) **PROCÉDÉ DE NEUTRALISATION D'UN POLYMÈRE ACRYLIQUE HYDROSOLUBLE PAR AU MOINS UN AGENT MONOVALENT ET AU MOINS UN AGENT DIVALENT, POLYMÈRES OBTENUS.**
VERFAHREN ZUR NEUTRALISATION EINES WASSERLÖSLICHEN ACRYLPOLYMERS UNTER VERWENDUNG MINDESTENS EINES EINWERTIGEN AGENS UND MINDESTENS EINES ZWEIWERTIGEN AGENS UND RESULTIERENDE POLYMERE
METHOD FOR NEUTRALISING A WATER-SOLUBLE ACRYLIC POLYMER USING AT LEAST ONE MONOVALENT AGENT AND AT LEAST ONE DIVALENT AGENT, AND RESULTING POLYMERS

(30) Priorité: 25.02.2009 FR 0951192
(43) Date de publication de la demande: 04.01.2012
(73) Titulaire: COATEX, 69730 Genay (FR)
(72) Inventeur: GUERRET, Olivier, F-69890 La Tour De Salvagny (FR); SUAU, Jean-Marc, F-69480 Lucenay (FR)
(74) Mandataire: Regimbeau
(86) Numéro de dépôt international: PCT/IB2010/000253
(87) Numéro de publication internationale: WO 2010/097667

(56) Documents cités:
- EP-A1- 0 100 948
- EP-A1- 0 717 051
- EP-A2- 1 347 834
- WO-A1-2005/095466
- WO-A1-91/12278
- WO-A2-02/49766
- JP-A- 2000 212 371
- JP-A- 2000 281 959
- DATABASE CA [online] CHEMICAL ABSTRACTS SERVICE, COLUMBUS, OHIO, US; 3 August 2000 (2000-08-03), ITAYAMA, HIROSHI ET AL: "Dispersing agents for inorganic pigments with good viscosity stability", XP002552225, retrieved from STN Database accession no. 2000:529580
- DATABASE WPI Week 200117, Derwent World Patents Index; AN 2001-161805, XP002552224

## Description

La présente invention concerne un procédé de neutralisation particulier d'un polymère acrylique hydrosoluble, par au moins un agent monovalent et au moins un agent divalent, lesdits agents étant préalablement mélangés en solution aqueuse. Cette technique conduit à un polymère limpide et avec un faible indice de polymolécularité, à la différence de l'art antérieur qui ne permettait pas d'accéder simultanément à ces deux propriétés.

L'industrie minéralière est une grande consommatrice de produits chimiques. Ceux-ci sont utilisés dans les différentes étapes de transformation/modification/traitement que subissent les matières minérales. Ainsi, dans le cas du carbonate de calcium d'origine naturelle ou synthétique, on réalise de nombreuses opérations dites de "broyage" (réduction de la taille granulométrique des particules) à sec ou en milieu humide, ou de "dispersion" (mise en suspension des particules dans un liquide).

Ces deux opérations sont rendues plus aisées par la mise en oeuvre respectivement d'agents de broyage, dont le rôle est de faciliter l'action mécanique d'attrition et de fragmentation des particules, et d'agent dispersants, dont la fonction consiste à maintenir la viscosité de la suspension dans des plages acceptables au fur et à mesure qu'on y introduit les matières minérales.

L'art antérieur est particulièrement riche au sujet de tels additifs. Depuis de nombreuses années, on sait que les homopolymères de l'acide acrylique constituent des agents efficaces pour aider à la dispersion ou au broyage en milieu humide du carbonate de calcium. En guise de référence, on pourra se reporter aux documents FR 2 539 137, FR 2 683 536, FR 2 683 537, FR 2 683 538, FR 2 683 539 et FR 2 802 830.

Pour le même type d'applications, il est également intéressant de copolymériser l'acide acrylique avec un autre monomère carboxylique, comme l'acide méthacrylique ou l'anhydride maléique, et / ou avec un autre monomère à insaturation éthylénique mais sans fonction carboxylique, comme un ester acrylique : ces variantes sont également décrites dans les documents précédents. On peut aussi polymériser l'acide acrylique avec un monomère cationique comme indiqué dans le document FR 2 900 411.

De même, il est également connu de copolymériser l'acide acrylique avec un monomère non-ionique de formule générale R-X-R' : R désigne une liaison polymérisable, X est un groupement oxyalkylé, et R' est un groupe terminal de type aryle et/ou alkyle plus ou moins hydrophobe. Outre leur capacité à disperser et à broyer efficacement un carbonate de calcium, ces polymères apportent des propriétés supplémentaires au produit final dans lequel est mis en oeuvre ledit carbonate : ces propriétés sont notamment conditionnées par la nature du groupement R'. A ce sujet, on pourra se reporter aux documents FR 2 810 261, FR 2 846 978, FR 2 846 972, FR 2 893 031, FR 2 913 426, et FR 2 913 420.

On sait que l'indice de polymolécularité des polymères hydrosolubles est aussi un paramètre qui permet d'optimiser certaines de leurs performances notamment en terme de dispersion de matières minérales. Ceci est rapporté dans les documents « Synthesis and Characterization of Poly(acrylic acid) Produced by RAFT Polymerization. Application as a Very Efficient Dispersant of CaCO3, Kaolin, and TiO2 » (Macromolecules, 36(9), 3066-3077, 2003) et « Dispersion of calcite by poly(sodium acrylate) prepared by réversible addition-fragmentation chain transfer (RAFT) polymerization » (Polymer (2005), 46(19), 8565-8572). Le contrôle de cet indice de polymolécularité est notamment obtenu à partir de techniques de polymérisation dites « vivantes », comme illustrées dans les documents WO 02 / 070571 et WO 2005 / 095466.

On sait également que le choix du poids moléculaire du polymère acrylique considéré peut, dans certains procédés particuliers de fabrication de carbonate de calcium en milieu humide, améliorer le rendement dudit procédé : le brevet EP 1 248 821 met par exemple l'accent sur des polymères carboxyliques de poids moléculaire élevé, pour disperser une quantité importante d'un carbonate de calcium issu d'une étape de broyage à faible concentration en l'absence de polymère. Le brevet FR 2 514 746 décrit quant à lui une méthode dite de « fractionnement » permettant de sélectionner les chaînes polymériques ayant une longueur donnée, en fonction de l'application choisie pour l'agent concerné.

Indépendamment de ces différents axes d'amélioration des propriétés applicatives d'un agent dispersant ou de broyage à base d'un acide acrylique (choix d'un comonomère, d'une technique de polymérisation, régulation du poids moléculaire), il est une caractéristique à laquelle l'homme du métier est particulièrement sensible : c'est la nature de la neutralisation dudit polymère. Cette sensibilité se mesure notamment au fait que la neutralisation est systématiquement revendiquée en tant que telle dans l'ensemble des brevets cités auparavant.

De manière très spécifique, il a été montré que le choix particulier de certains agents de neutralisation conduisait à des propriétés applicatives sensiblement améliorées. Ainsi, le document EP 0 100 948 démontre l'intérêt d'une neutralisation par mise en oeuvre de la combinaison entre les ions sodium et calcium. Une génération de brevets postérieurs (FR 2 683 538 et FR 2 683 539) met quant à elle l'accent sur le couple d'ions magnésium / sodium. Enfin, on connaît une dernière génération de brevets (EP 1 347 834 et EP 1 347 835) qui repose sur une neutralisation partielle (tous les sites carboxyliques ne sont pas neutralisés) à partir de l'action conjointe d'un agent monovalent (préférentiellement le sodium) et d'au moins un agent divalent (préférentiellement le calcium ou le magnésium).

Il apparaît donc que pour des polymères acryliques utilisés pour disperser ou broyer des matières minérales, la neutralisation particulière à partir d'un couple constitué d'au moins un agent monovalent et d'au moins un agent divalent représente un grand intérêt applicatif. La Demanderesse n'entend pas expliquer la manière dont ce type de neutralisation influence les propriétés finales du polymère considéré, ce qui relève d'un spécialiste de l'application. Dans le cas présent, elle se positionne résolument au niveau du procédé de synthèse de ces polymères : l'homme du métier est ici un ingénieur chimiste, spécialiste de la synthèse des polymères acryliques hydrosolubles. Or, la neutralisation de ce type de polymères par un couple constitué d'au moins un agent monovalent et d'au moins un agent divalent pose aujourd'hui un certain nombre de problèmes.

Différents procédés de neutralisation d'un acide polyacrylique hydrosoluble par un agent monovalent ou un agent divalent sont décrits dans la littérature.

Le document JP 2000 212371 A et le document EP 0 717 051 décrivent un procédé de neutralisation d'un polyacide acrylique en solution aqueuse par ajout simultané d'un agent monovalent et d'un agent divalent.

Le document JP200281959 décrit un procédé de neutralisation d'un polyacide acrylique en solution aqueuse par ajout séquentiel d'un agent monovalent et d'un agent divalent.

La méthode de neutralisation communément choisie par l'homme du métier est à ce jour celle relatée comme état de la technique dans le document WO 91 / 12278, dans le cas d'un mélange entre un ion monovalent et un ion divalent. Ce dernier document est particulièrement intéressant, car il est a priori le seul à renvoyer aux pratiques de l'homme du métier en matière de procédé de neutralisation d'un polymère acrylique hydrosoluble dans le cas du mélange précité.

Ce document rappelle la faible solubilité des ions calcium et magnésium, relativement à celle du sodium. Ceci incite de manière naturelle l'homme du métier à réaliser une neutralisation séquencée : tout d'abord à partir d'une solution aqueuse d'hydroxyde de calcium ou de magnésium qu'on laisse réagir, puis avec une solution d'hydroxyde de sodium. On parlera dans ce cas de procédé de neutralisation « séquencé post-polymérisation ». Ce protocole opératoire est très clairement décrit dans les exemples comparatifs n° 2 à 6 de ce document. Les essais correspondant démontrent cependant que les polymères obtenus sont turbides, cette turbidité étant due à un phénomène de précipitation (premier paragraphe, page 3).

Dans le cadre des pratiques usuelles de l'homme du métier (procédé séquencé post-polymérisation relaté ci-dessus), la turbidité observée au niveau du polymère final n'est pas sans poser de nombreux problèmes. Dans une industrie chimique aux contraintes réglementaires sans cesse croissantes, où le client final s'oriente vers des solutions les moins toxiques et dangereuses possibles, la turbidité d'un produit constitue un facteur négatif d'un point de vue marketing, par opposition à un produit clair et limpide. Sur un plan plus scientifique, cette turbidité est symptomatique d'un produit non homogène en solution puisqu'elle est reliée à la présence de polymère sous forme précipitée : il est évident que les propriétés finales dudit produit risquent d'en être impactées. De plus, ces impuretés sous forme précipitée peuvent engendrer des problèmes de sédimentation au cours du stockage.

La solution au problème de turbidité telle que préconisée par le document WO 91 / 12278 consiste à pré-neutraliser le monomère à polymériser avec l'agent divalent, à polymériser celui-ci, et à terminer la neutralisation avec l'agent monovalent ; on parlera dans ce cas de procédé de « pré-neutralisation ». Les auteurs de ce document démontrent que les polymères fabriqués sont beaucoup plus limpides que ceux obtenus dans le cas du procédé séquencé post-polymérisation, leur poids moléculaire étant conservé.

En revanche, ce que ne divulgue pas le document WO 91 / 12278, c'est que la cinétique de polymérisation du polymère est grandement affectée dans le cas d'un procédé du type pré-neutralisation. Les essais réalisés dans la présente Demande démontrent en effet que les indices de polymolécularité sont alors systématiquement supérieurs à 3,0 pour un poids moléculaire compris entre 5 000 g/mol et 15 000 g/mol. Or, comme on l'a déjà expliqué, l'efficacité dispersante et broyante d'un polymère acrylique est améliorée si son indice de polymolécularité est faible. La solution proposée par le document WO 91 / 12278 n'est donc pas satisfaisante.

Sans vouloir être liée à une quelconque théorie, la Demanderesse pense que les mécanismes réactionnels de polymérisation sont largement affectés dans le cas du procédé objet du document WO 91 / 12278, par la pré-neutralisation partielle du monomère avec l'agent divalent. En effet, la polymérisation porte alors sur 2 populations chimiques bien distinctes : des monomères non encore neutralisés et des monomères neutralisés avec l'agent divalent. Il n'est pas étonnant que la polymolécularité (ou distribution des longueurs de chaînes polymères) s'en trouve largement affectée au final.

Aussi, la Demanderesse a-t-elle mis au point un procédé de fabrication d'un polymère acrylique hydrosoluble, totalement ou partiellement neutralisé par au moins un agent monovalent et au moins un agent divalent, caractérisé en ce que la neutralisation dudit polymère est réalisée à travers les étapes de :
1) fabrication d'une solution aqueuse dudit agent monovalent et dudit agent divalent,
2) mélange de ladite solution avec la solution aqueuse contenant le polymère sous forme acide.

De manière surprenante, car non divulguée ni suggérée dans l'état de la technique, le procédé selon la présente invention permet de fabriquer des polymères acryliques hydrosolubles neutralisés avec au moins un agent monovalent et au moins un agent divalent, qui s'avèrent parfaitement limpides. Leur turbidité, telle que mesurée selon la méthode décrite dans le document WO 91 / 12278 est inférieure à celle obtenue pour les polymères résultant du procédé séquencé post-neutralisation, avec les avantages que cela comporte : absence de sédimentation, pureté et homogénéité du produit. On a même démontré que le procédé selon l'invention était beaucoup plus rapide -et donc plus économique- que le procédé séquencé post-neutralisation.

D'une manière tout aussi surprenante et avantageuse, le procédé objet de la présente invention apparaît au moins aussi rapide que le procédé de pré-neutralisation objet du document WO 91 / 12278. Il conduit à des polymères au moins aussi limpides mais surtout, à des indices de polymolécularité systématiquement inférieurs à 3,0 pour un poids moléculaire compris entre 5 000 g/mol et 15 000 g/mol : comme déjà expliqué, ceci constitue un avantage technique fondamental au niveau des propriétés applicatives dudit polymère.

L'invention est exposée dans le jeu de revendications joint.

Aussi, l'objet de l'invention consiste en un procédé de fabrication d'un polymère acrylique hydrosoluble, présentant :
- une valeur de turbidité TUF (unité de turbidité relative à la formazine) inférieure à 10, pour une concentration de 25 % en poids sec de polymère dans l'eau,
- et un indice de polymolécularité compris entre 1,5 et 3,0 pour une masse moléculaire en poids comprise entre 5 000 g/mol et 15 000 g/mol, mesurés par chromatographie par perméation de gel
totalement ou partiellement neutralisé par au moins un agent monovalent et au moins un agent divalent, caractérisé en ce que la neutralisation dudit polymère est réalisée à travers les étapes de :
1) fabrication d'une solution aqueuse dudit agent monovalent et dudit agent divalent,
2) mélange de ladite solution avec la solution aqueuse contenant le polymère sous forme acide.

L'étape 1) de fabrication de la solution aqueuse contenant l'agent monovalent et l'agent divalent est réalisée par mélange des quantités données desdits agents avec de l'eau, lesdits agents étant le plus souvent introduits sous forme d'une solution aqueuse contenant ledit agent ; lorsque ledit agent est un cation (comme le sodium, le magnésium, le calcium, etc) il est introduit sous forme d'une suspension aqueuse contenant l'oxyde et/ou l'hydroxyde du cation correspondant. L'ordre d'introduction et de mélange des différents constituants sera choisi par l'homme du métier, de manière à obtenir une solution aqueuse stable et homogène.

L'étape 2) de fabrication du mélange est en général réalisée par introduction continue et/ou progressive et/ou en plusieurs temps de la solution aqueuse résultant de l'étape 1) dans la solution aqueuse contenant le polymère sous forme acide. On peut éventuellement procéder de manière inverse par introduction de la solution de polymère acide dans la solution résultant de l'étape 1).

Ce procédé est caractérisé en ce que ledit polymère présente :
- une valeur de turbidité TUF (unité de turbidité relative à la formazine) inférieure à 10, pour une concentration de 25 % en poids sec de polymère,
- et un indice de polymolécularité compris entre 1,5 et 3,0 pour un poids moléculaire compris entre 5 000 g/mol et 15 000 g/mol, préférentiellement entre 8 000 g/mol et 15 000 g/mol mesurés par chromatographie par perméation de gel.

La Demanderesse indique que la valeur de turbidité TUF est parfaitement connue ainsi que sa méthode de détermination, comme le démontre par exemple l'existence du brevet WO 91 / 12278 délivré depuis plus de dix ans et qui repose sur cette méthode, sans qu'il ait été question de divulguer celle-ci dans tous ces détails. Quant à la mesure du poids moléculaire et de l'indice de polymolécularité, elles sont réalisées par GPC (chromatographie par perméation de gel) selon la méthode bien connue et déjà décrite dans de nombreux documents tel que le brevet EP 1 347 834.

Le procédé selon l'invention est aussi caractérisé en ce que l'agent monovalent est choisi parmi les amines primaires, les hydroxydes de lithium, potassium et sodium et leurs mélanges, et en ce que l'agent monovalent est préférentiellement l'hydroxyde de sodium.

Ce procédé est aussi caractérisé en ce que l'agent divalent est choisi parmi les hydroxydes et / ou oxydes de calcium, de magnésium, et leurs mélanges.

Selon une première variante, ce procédé est aussi caractérisé en ce que ledit polymère acrylique hydrosoluble est totalement neutralisé.

Selon une seconde variante, ce procédé est aussi caractérisé en ce que ledit polymère acrylique hydrosoluble est partiellement neutralisé.

Ce procédé est aussi caractérisé en ce que ledit polymère acrylique hydrosoluble est obtenu par des procédés de polymérisation radicalaire en solution, en émulsion directe ou inverse, en suspension ou précipitation dans des solvants appropriés, en présence de systèmes catalytiques et d'agents de transfert, ou encore par des procédés de polymérisation radicalaire contrôlée et préférentiellement par la polymérisation contrôlée par des nitroxydes (NMP) ou par des cobaloxymes, la polymérisation par transfert d'atome radicalaire (ATRP), la polymérisation radicalaire contrôlée par des dérivés soufrés, choisis parmi des carbamates, des dithioesters ou des trithiocarbonates (RAFT) ou des xanthates.

Ce procédé est aussi caractérisé en ce que ledit polymère acrylique hydrosoluble, avant ou après sa neutralisation, est traité et séparé en plusieurs phases, selon des procédés statiques ou dynamiques, par un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges.

Ce procédé est aussi caractérisé en ce que ledit polymère acrylique hydrosoluble est séché.

Ce procédé est aussi caractérisé en ce que ledit polymère acrylique hydrosoluble est un homopolymère de l'acide acrylique, ou un copolymère de l'acide acrylique avec un autre comonomère.

Parmi ces comonomères, on pourra citer des monomères à fonction monocarboxylique et préférentiellement les acides méthacrylique, crotonique, isocrotonique, cinnamique, ou des hémiesters de diacides et préférentiellement parmi les monoesters en C₁ à C₄ des acides maléique ou itaconique, ou des monomères à insaturation éthylénique et fonction dicarboxylique à l'état acide ou salifié, et préférentiellement l'acide itaconique, maléique, fumarique, mésaconique, citraconique, ou est choisi parmi les anhydrides d'acides carboxyliques.

Parmi ces comonomères, on pourra aussi citer des monomères à insaturation éthylénique, mais sans fonction carboxylique, comme les monomères à insaturation éthylénique et à fonction sulfonique à l'état acide ou salifié, et préférentiellement l'acide acrylamido-2-méthyl-2-propane-sulfonique, le méthallylsulfonate de sodium, l'acide vinyl sulfonique et l'acide styrène sulfonique, ou les monomères à insaturation éthylénique et à fonction phosphorique à l'état acide ou salifié, et préférentiellement l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats, ou les monomères à insaturation éthylénique et à fonction phosphonique à l'état acide ou salifié, et préférentiellement l'acide vinyl phosphonique.

Parmi ces comonomères, on pourra aussi citer des monomères cationiques comme les ammonium quaternaires, et préférentiellement le chlorure ou le sulfate de [2-(méthacryloyloxy) éthyl] triméthyl ammonium, le chlorure ou le sulfate de [2-(acryloyloxy) éthyl] triméthyl ammonium, le chlorure ou le sulfate de [3-(acrylamido) propyl] triméthyl ammonium, le chlorure ou le sulfate de diméthyl diallyl ammonium, le chlorure ou le sulfate de [3-(méthacrylamido) propyl] triméthyl ammonium.

Parmi ces comonomères, on pourra enfin citer des monomères comme le N-[3-(diméthylamino) propyl] acrylamide, le N-[3-(diméthylamino) propyl] méthacrylamide, les esters insaturés tels que le méthacrylate de N-[2-(diméthylamino) éthyl], ou l'acrylate de N-[2-(diméthylamino) éthyl], ou l'acrylamide, le méthacrylamide, les acrylates ou méthacrylates d'alkyle, les vinyliques, et préférentiellement l'acétate de vinyle, la vinylpyrrolidone, le styrène, l'alphaméthylstyrène et leurs dérivés, ou les monomères de formule (I) : 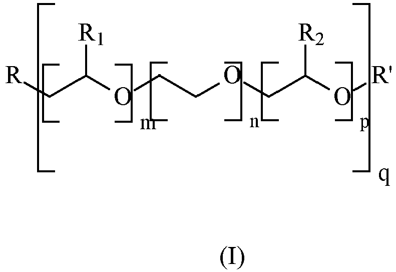 dans laquelle :
- m, n, p et q sont des entiers et m, n, p sont inférieurs à 150, q est supérieur à 0 et au moins un entier parmi m, n et p est non nul,
- R est un radical comportant une fonction insaturée polymérisable,
- R₁ et R₂ sont identiques ou différents et représentent des atomes d'hydrogène ou des groupements alkyls,
- R' représente l'hydrogène ou une chaîne alkyle et/ou aryle, linéaire ou ramifiée, ayant de 1 à 40 atomes de carbone.

La présente demande décrit également un polymère acrylique hydrosoluble, totalement ou partiellement neutralisé par au moins un agent monovalent et au moins un agent divalent, caractérisé en ce que ledit polymère présente :
- une valeur de turbidité TUF (unité de turbidité relative à la formazine) inférieure à 10, pour une concentration de 25 % en poids sec de polymère,
- et un indice de polymolécularité compris entre 1,5 et 3,0 pour un poids moléculaire compris entre 5 000 g/mol et 15 000 g/mol, préférentiellement entre 8 000 g/mol et 15 000 g/mol.

Le polymère est aussi caractérisé en ce que l'agent monovalent est choisi parmi les amines primaires, les hydroxydes de lithium, potassium et sodium et leurs mélanges, et en ce que l'agent monovalent est préférentiellement l'hydroxyde de sodium.

Le polymère est aussi caractérisé en ce que l'agent divalent est choisi parmi les hydroxydes et / ou oxydes de calcium, de magnésium et leurs mélanges.

Selon une première variante, le polymère est aussi caractérisé en ce qu'il est totalement neutralisé.

Selon une seconde variante, le polymère est aussi caractérisé en ce qu'il est partiellement neutralisé.

Le polymère est aussi caractérisé en ce qu'il est obtenu par des procédés de polymérisation radicalaire en solution, en émulsion directe ou inverse, en suspension ou précipitation dans des solvants appropriés, en présence de systèmes catalytiques et d'agents de transfert, ou encore par des procédés de polymérisation radicalaire contrôlée et préférentiellement par la polymérisation contrôlée par des nitroxydes (NMP) ou par des cobaloxymes, la polymérisation par transfert d'atome radicalaire (ATRP), la polymérisation radicalaire contrôlée par des dérivés soufrés, choisis parmi des carbamates, des dithioesters ou des trithiocarbonates (RAFT) ou des xanthates.

Le polymère est aussi caractérisé en ce que, avant ou après sa neutralisation, il est traité et séparé en plusieurs phases, selon des procédés statiques ou dynamiques, par un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges.

Le polymère est aussi caractérisé en ce qu'il est séché.

Le polymère est aussi caractérisé en ce qu'il est un homopolymère de l'acide acrylique, ou un copolymère de l'acide acrylique avec un autre comonomère. Le comonomère appartient alors de manière préférée à la liste des comonomères déjà indiquée auparavant.

Les exemples qui suivent permettront de mieux appréhender l'invention, sans toutefois en limiter la portée.

### EXEMPLES

Dans tous les essais, les valeurs de poids moléculaires et d'indice de polymolécularité sont mesurées selon la méthode divulguée dans le document EP 1 347 834.

La turbidité TUF (unité de turbidité relative à la formazine) est mesurée selon la méthode indiquée dans le document WO 91 / 12278.

Les synthèses d'acides polyacryliques sont réalisées selon des méthodes bien connues de l'homme du métier (voir l'ensemble des documents cités dans la présente Demande), par des techniques à travers lesquelles l'homme du métier sait notamment fabriquer un polymère de poids moléculaire donné.

### Exemple 1

Cet exemple illustre la fabrication d'homopolymères de l'acide acrylique d'un poids moléculaire voisin de 5 000 g/mol, dont 30 % molaire des sites carboxyliques sont neutralisés par l'ion calcium et 70 % par l'ion sodium :
- dans le cas du procédé séquencé post-polymérisation (art antérieur correspondant à la pratique habituelle de l'homme du métier) : essai n° 1,
- dans le cas du procédé pré-neutralisation (art antérieur correspondant au procédé selon le document WO 91 / 12278) : essai n° 2,
- dans le cas du procédé selon la présente invention : essai n° 3.

### Essai n° 1

Cet essai illustrant l'art antérieur est similaire à l'essai comparatif 1 du document WO 91 / 12278.

On commence par introduite 250 grammes d'acide acrylique dans 700 grammes d'eau. On réalise la polymérisation de cet acide acrylique à 90°C environ.

On introduit alors 38 grammes d'hydroxyde de calcium, et on laisse réagir pendant 2 heures, le temps que soit dissout ledit hydroxyde. On introduit ensuite 225 grammes de soude à 45 % et on laisse réagir pendant 20 minutes.

En fin de réaction, on ajoute de l'eau de manière à obtenir une concentration finale en poids sec de polymère égale 25 %.

### Essai n° 2

Cet essai illustrant l'art antérieur est similaire à l'essai n° 1 du document WO 91 / 12278. Dans un bécher contenant 700 grammes d'eau, on introduit 250 grammes d'acide acrylique et 38 grammes d'hydroxyde de calcium ; la température est alors d'environ 35°C et on laisse réagir pendant 15 minutes.

On réalise ensuite la polymérisation de l'acide acrylique partiellement neutralisé.

En fin de réaction, on introduit 225 grammes de soude à 45 % et on laisse réagir pendant 20 minutes.

On ajoute finalement de l'eau de manière à obtenir une concentration finale en poids sec de polymère égale 25 %.

### Essai n° 3

Cet essai illustre l'invention.

On commence par polymériser 250 grammes d'acide acrylique, dans 700 grammes d'eau. Dans 80 grammes d'eau, on introduit sous vive agitation 38 grammes d'hydroxyde de calcium, puis 225 grammes de soude à 45 %.

On introduit à 80°C ce mélange dans la solution aqueuse d'acide acrylique polymérisé, et on laisse agir pendant 30 minutes.

On ajoute finalement de l'eau de manière à obtenir une concentration finale en poids sec de polymère égale 25 %.

Pour chacun des essais, on a indiqué dans le tableau 1 le temps total nécessaire à la neutralisation du polymère, la turbidité TUF (mesurée pour une concentration en poids sec de polymère égale à 25 %), le poids moléculaire et l'indice de polymolécularité.

**Tableau 1**

| Essai n° | Art Antérieur INvention | Temps neutralisation | TUF | Mw (g/mol) | Ip |
|---|---|---|---|---|---|
| 1 | AA | 2 h 20 min | 20 | 5 900 | 2,5 |
| 2 | AA | 35 min | 11 | 5 600 | 3,1 |
| 3 | INvention | 30 min | 8 | 6 000 | 2,5 |

Ces résultats démontrent que le polymère selon l'invention est toujours le plus limpide.

En outre, on a sensiblement amélioré le rendement du procédé par rapport au procédé séquencé post-neutralisation (essai n° 1) : le temps de neutralisation est bien inférieur. Par rapport au procédé de pré-neutralisation (essai n° 2), on parvient à un polymère ayant un indice de polymolécularité bien plus faible : c'est un gage certain de meilleures performances applicatives.

### Exemple 2

Cet exemple illustre la fabrication d'homopolymères de l'acide acrylique d'un poids moléculaire voisin de 10 000 g/mol, dont 30 % molaire de ses sites carboxyliques sont neutralisés par l'ion calcium et 70 % par l'ion sodium :
- dans le cas du procédé séquencé post-polymérisation (art antérieur correspondant à la pratique commune de l'homme du métier) : essai n° 4,
- dans le cas du procédé pré-neutralisation (art antérieur correspondant au procédé selon le document WO 91 / 12278) : essai n° 5,
- dans le cas du procédé selon la présente invention : essai n° 6.

### Essai n° 4

Cet essai illustre l'art antérieur.

On commence par introduire 250 grammes d'acide acrylique dans 700 grammes d'eau. On réalise la polymérisation de cet acide acrylique à 90°C environ.

On introduit alors 38 grammes d'hydroxyde de calcium, et on laisse réagir pendant 2 heures 15 minutes, le temps que soit dissout ledit hydroxyde. On introduit ensuite 225 grammes de soude à 45 % et on laisse réagir pendant 25 minutes.

En fin de réaction, on ajoute de l'eau de manière à obtenir une concentration finale en poids sec de polymère égale 25 %.

### Essai n° 5

Cet essai illustre l'art antérieur.

Dans un bécher contenant 700 grammes d'eau, on introduit 250 grammes d'acide acrylique et 38 grammes d'hydroxyde de calcium ; la température est alors d'environ 35°C et on laisse réagir pendant 20 minutes.

On réalise ensuite la polymérisation de l'acide acrylique partiellement neutralisé.

En fin de réaction, on introduit 225 grammes de soude à 45 % et on laisse réagir pendant 25 minutes.

On ajoute finalement de l'eau de manière à obtenir une concentration finale en poids sec de polymère égale 25 %.

### Essai n° 6

Cet essai illustre l'invention.

On commence par polymériser 250 grammes d'acide acrylique, dans 700 grammes d'eau. Dans 80 grammes d'eau, on introduit sous vive agitation 38 grammes d'hydroxyde de calcium, puis 225 grammes de soude à 45 %.

On introduit à 80°C ce mélange dans la solution aqueuse d'acide acrylique polymérisé, et on laisse agir pendant 40 minutes.

On ajoute finalement de l'eau de manière à obtenir une concentration finale en poids sec de polymère égale 25 %.

Pour chacun des essais, on a indiqué dans le tableau 2 le temps total nécessaire à la neutralisation du polymère, la turbidité TUF (mesurée pour une concentration en poids sec de polymère égale à 25 %), le poids moléculaire et l'indice de polymolécularité.

**Tableau 2**

| Essai n° | Art Antérieur INvention | Temps neutralisation | TUF | Mw (g/mol) | Ip |
|---|---|---|---|---|---|
| 4 | AA | 2 h 40 min | 25 | 10 000 | 2,8 |
| 5 | AA | 45 min | 13 | 11 000 | 3,5 |
| 6 | INvention | 40 min | 8 | 10 100 | 2,8 |

Ces résultats démontrent que le polymère selon l'invention est toujours le plus limpide. Le rendement du procédé par rapport au procédé séquencé post-neutralisation (essai n° 4) a été amélioré : le temps de neutralisation est bien inférieur.

Par rapport au procédé de pré-neutralisation (essai n° 5), on parvient à un polymère ayant un indice de polymolécularité bien plus faible ce qui présage de meilleures propriétés applicatives.

### Exemple 3

Cet exemple illustre la fabrication de 2 homopolymères de l'acide acrylique, respectivement :
- d'un poids moléculaire voisin de 12 000 g/mol, dont 15 % molaire de ses sites carboxyliques sont neutralisés par l'ion calcium, 15 % par l'ion magnésium et 70 % par l'ion sodium : essai n° 7,
- d'un poids moléculaire voisin de 4 000 g/mol, dont 70 % molaire de ses sites carboxyliques sont neutralisés par l'ion calcium, et 30 % par l'ion sodium : essai n° 8

### Essai n° 7

Cet essai illustre l'invention.

On commence par polymériser 250 grammes d'acide acrylique, dans 700 grammes d'eau. Dans 80 grammes d'eau, on introduit sous vive agitation 19 grammes d'hydroxyde de calcium, 15 grammes d'hydroxyde de magnésium puis 225 grammes de soude à 45 %.

On introduit à 80°C ce mélange dans la solution aqueuse d'acide acrylique polymérisé, et on laisse agir pendant 30 minutes.

On ajoute finalement de l'eau de manière à obtenir une concentration finale en poids sec de polymère égale 25 %.

### Essai n° 8

Cet essai illustre l'invention.

On commence par polymériser 250 grammes d'acide acrylique, dans 700 grammes d'eau. Dans 80 grammes d'eau, on introduit sous vive agitation 89 grammes d'hydroxyde de calcium puis 93 grammes de soude à 45 %.

On introduit à 80°C ce mélange dans la solution aqueuse d'acide acrylique polymérisé, et on laisse agir pendant 30 minutes.

On ajoute finalement de l'eau de manière à obtenir une concentration finale en poids sec de polymère égale 25 %.

Pour chacun des essais, on a indiqué dans le tableau 3 le temps total nécessaire à la neutralisation du polymère, la turbidité TUF, le poids moléculaire et l'indice de polymolécularité.

**Tableau 3**

| Essai n° | Art Antérieur INvention | Temps neutralisation | TUF | Mw (g/mol) | Ip |
|---|---|---|---|---|---|
| 7 | INvention | 30 | 9 | 12 000 | 2,9 |
| 8 | INvention | 30 | 5 | 4 000 | 2,3 |

Ces résultats démontrent qu'on parvient à obtenir des polymères très limpides, avec un faible indice de polymolécularité. En outre, il est possible d'obtenir de telles caractéristiques pour un taux de neutralisation en agent divalent supérieur à 60 % (70 % en calcium pour l'essai 8) ce qui était rigoureusement impossible avec le procédé selon le document WO 91 / 12278 (voir dernier paragraphe de ce document avant la partie expérimentale).

## Revendications

1. - Procédé de fabrication d'un polymère acrylique hydrosoluble, présentant :
- une valeur de turbidité TUF, unité de turbidité relative à la formazine, inférieure à 10, pour une concentration de 25 % en poids sec de polymère dans l'eau,
- et un indice de polymolécularité compris entre 1,5 et 3,0 pour une masse moléculaire en poids comprise entre 5 000 g/mol et 15 000 g/mol, mesurés par chromatographie par perméation de gel,
totalement ou partiellement neutralisé par au moins un agent monovalent et au moins un agent divalent, **caractérisé en ce que** la neutralisation dudit polymère est réalisée à travers les étapes de :
1) fabrication d'une solution aqueuse dudit agent monovalent et dudit agent divalent,
2) mélange de ladite solution avec la solution aqueuse contenant le polymère sous forme acide.

2. - Procédé selon la revendication 1, **caractérisé en ce que** l'agent monovalent est choisi parmi les amines primaires, les hydroxydes de lithium, potassium et sodium et leurs mélanges, et **en ce que** l'agent monovalent est préférentiellement l'hydroxyde de sodium.

3. - Procédé selon l'une des revendications 1 à 2, **caractérisé en ce que** l'agent divalent est choisi parmi les hydroxydes et / ou oxydes de calcium, de magnésium, et leurs mélanges..

4. - Procédé selon l'une des revendications 1 à 3, **caractérisé en ce que** ledit polymère acrylique hydrosoluble est totalement neutralisé.

5. - Procédé selon l'une des revendications 1 à 3, **caractérisé en ce que** ledit polymère acrylique hydrosoluble est partiellement neutralisé.

6. - Procédé selon l'une des revendications 1 à 5, **caractérisé en ce que** ledit polymère acrylique hydrosoluble est obtenu par des procédés de polymérisation radicalaire en solution, en émulsion directe ou inverse, en suspension ou précipitation dans des solvants appropriés, en présence de systèmes catalytiques et d'agents de transfert, ou encore par des procédés de polymérisation radicalaire contrôlée et préférentiellement par la polymérisation contrôlée par des nitroxydes, NMP, ou par des cobaloxymes, la polymérisation par transfert d'atome radicalaire, ATRP, la polymérisation radicalaire contrôlée par des dérivés soufrés, choisis parmi des carbamates, des dithioesters ou des trithiocarbonates, RAFT, ou des xanthates.

7. - Procédé selon l'une des revendications 1 à 6, **caractérisé en ce que** ledit polymère acrylique hydrosoluble, avant ou après sa neutralisation, est traité et séparé en plusieurs phases, selon des procédés statiques ou dynamiques, par un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges.

8. - Procédé selon l'une des revendications 1 à 7, **caractérisé en ce que** ledit polymère acrylique hydrosoluble est séché.

9. - Procédé selon l'une des revendications 1 à 8, **caractérisé en ce que** ledit polymère acrylique hydrosoluble est un homopolymère de l'acide acrylique, ou un copolymère de l'acide acrylique avec un autre comonomère.

## Patentansprüche

1. - Verfahren zur Herstellung eines wasserlöslichen Acrylpolymers, das:
- einen Trübungswert, TUF, wobei sich die Trübungseinheit auf Formazin bezieht, von weniger als 10 hat,
bei einer Konzentration von 25 % Trockenpolymergewicht in Wasser,
- und einen Polymerisationsgrad von 1,5 bis 3,0 für eine Molmasse zwischen 5.000 g/mol und 15.000 g/mol, gemessen mittels Gel-Permeations-Chromatographie,
vollständig oder teilweise neutralisiert durch mindestens eine einwertige und mindestens eine zweiwertige Substanz, **dadurch gekennzeichnet, dass** die Neutralisierung dieses Polymers durch folgende Schritte erfolgt:
1) Herstellen einer wässrigen Lösung dieser einwertigen und zweiwertigen Substanz,
2) Vermischen dieser Lösung mit der wässrigen Lösung, die das Polymer in saurer Form enthält.

2. - Verfahren nach Anspruch 1, **dadurch gekennzeichnet, dass** die einwertige Substanz ausgewählt ist aus primären Aminen, Lithium-, Kalium- und Natriumhydroxiden sowie Mischungen davon, und dass vorzugsweise Natriumhydroxid als einwertige Substanz verwendet wird.

3. - Verfahren nach einem der Ansprüche 1 bis 2, **dadurch gekennzeichnet, dass** das zweiwertige Mittel aus Calcium- und Magnesiumhydroxiden und/oder -oxiden sowie Mischungen davon ausgewählt ist.

4. - Verfahren nach einem der Ansprüche 1 bis 3, **dadurch gekennzeichnet, dass** das wasserlösliche Acrylpolymer vollständig neutralisiert ist.

5. - Verfahren nach einem der Ansprüche 1 bis 3, **dadurch gekennzeichnet, dass** das wasserlösliche Acrylpolymer teilweise neutralisiert ist.

6. - Verfahren nach einem der Ansprüche 1 bis 5, **dadurch gekennzeichnet, dass** das wasserlösliche Acrylpolymer erhalten wird mittels radikalischer Polymerisationsverfahren in Lösung, in direkter oder inverser Emulsion, als Suspension oder Fällung in geeigneten Lösungsmitteln, in Gegenwart katalytischer Systeme und Transfersubstanzen, oder durch kontrollierte radikalische Polymerisationsverfahren, bevorzugt durch Nitroxid-vermittelte Polymerisation, NMP, oder mittels Cobaloxime, Atomtransfer-Radikal-Polymerisation, ATRP, oder kontrollierte radikalische Polymerisation mittels schwefelhaltiger Derivate wie Carbamaten, Dithioestern oder Trithiocarbonaten, RAFT, oder Xanthaten.

7. - Verfahren nach einem der Ansprüche 1 bis 6, **dadurch gekennzeichnet, dass** das wasserlösliche Acrylpolymer vor oder nach seiner Neutralisierung mittels statischer oder dynamischer Verfahren unter Verwendung eines oder mehrerer polarer Lösungsmittel, die vorzugsweise aus Wasser, Methanol, Ethanol, Propanol, Isopropanol, Butanolen, Aceton, Tetrahydrofuran oder Mischungen davon bestehen, behandelt und separiert wird.

8. - Verfahren nach einem der Ansprüche 1 bis 7, **dadurch gekennzeichnet, dass** das wasserlösliche Acrylpolymer getrocknet wird.

9. - Verfahren nach einem der Ansprüche 1 bis 8, **dadurch gekennzeichnet, dass** das wasserlösliche Acrylpolymer ein Homopolymer der Acrylsäure oder ein Copolymer aus Acrylsäure und einem anderen Comonomer ist.

## Claims

1. - A method for manufacturing a water-soluble acrylic polymer, having:
- an FTU turbidity value, turbidity unit relative to formazine, less than 10,
for a concentration of 25% of polymer by dry weight in water,
- and a polymolecularity index comprised between 1.5 and 3.0 for a molecular mass by weight comprised between 5,000 g/mol and 15,000 g/mol, measured by gel permeation chromatography,
fully or partially neutralized by at least one monovalent agent and at least one divalent agent, **characterized in that** the neutralization of said polymer is carried out via the steps of:
1) manufacturing an aqueous solution of said monovalent agent and of said divalent agent,
2) mixing said solution with the aqueous solution containing the polymer in acid form.

2. - A method according to claim 1, **characterized in that** the monovalent agent is chosen among primary amines, lithium, potassium and sodium hydroxides and mixtures thereof, and **in that** the monovalent agent is preferentially sodium hydroxide.

3. - A method according to one of claims 1 to 2, **characterized in that** the divalent agent is chosen among calcium and magnesium hydroxides and/or oxides and mixtures thereof.

4. - A method according to one of claims 1 to 3, **characterized in that** said water-soluble acrylic polymer is fully neutralized.

5. - A method according to one of claims 1 to 3, **characterized in that** said water-soluble acrylic polymer is partially neutralized.

6. - A method according to one of claims 1 to 5, **characterized in that** said water-soluble acrylic polymer is obtained by methods of radical polymerization in solution, in a direct or inverse emulsion, in suspension or precipitation in appropriate solvents, in the presence of catalytic systems and transfer agents, or even by methods of controlled radical polymerization, and preferentially by nitroxide-mediated polymerization, NMP, or by cobaloxime-mediated polymerization, by atom transfer radical polymerization, ATRP, by sulphurated derivative-mediated radical polymerization, said derivatives are chosen among carbamates, dithioesters or trithiocarbonates, RAFT, or xanthates.

7. - A method according to one of claims 1 to 6, **characterized in that** said water-soluble acrylic polymer, before or after it is neutralized, is treated and separated into several phases, using static or dynamic methods, by one or more polar solvents preferentially belonging to the group constituted by water, methanol, ethanol, propanol, isopropanol, butanols, acetone, tetrahydrofuran or mixtures thereof.

8. - A method according to one of claims 1 to 7, **characterized in that** said water-soluble acrylic polymer is dried.

9. - A method according to one of claims 1 to 8, **characterized in that** said water-soluble acrylic polymer is a homopolymer of acrylic acid, or a copolymer of acrylic acid with another comonomer.
